# EUROPEAN PATENT SPECIFICATION

(11) **EP 0 982 984 B1**
(45) Date of publication and mention of the grant of the patent: **11.09.2002**
(21) Application number: 97921631.4
(22) Date of filing: 05.05.1997
(51) Int. Cl.: A01K 61/00

(54) **APPARATUS FOR GRADING FISH ACCORDING TO SIZE**
VORRICHTUNG ZUM NACH GRÖSSE SORTIEREN VON FISCHEN
APPAREIL DE CLASSEMENT DE POISSONS SELON LEUR TAILLE

(43) Date of publication of application: 08.03.2000
(73) Proprietor: Cimbria Aquatec APS, 6040 Egtved (DK)
(72) Inventor: PEDERSEN, Ole, Enggaard, DK-6040 Egtved (DK)
(74) Representative: Roerboel, Leif
(86) International application number: DK9700204
(87) International publication number: WO98049892

(56) References cited:
- DD-A- 239 933
- DE-A- 2 531 507
- NO-A- 883 943
- SU-A- 1 090 309

## Description

### TECHNICAL FIELD

The present invention relates to an apparatus for grading fish according to size, said apparatus being of the kind set forth in the preamble of claim 1.

### BACKGROUND ART

From Norwegian laid open patent application NO 883943 a sorting apparatus for sorting fish is known, which applies a sorting grille consisting of inclined, rotating tubes positioned in the same plane and in parallel, since between the tubes a slit has been provided of a size corresponding to the sorting size for the fish. The slit may have varying width in the longitudinal direction so as to enable sorting in several sizes forwardly along the grille. According to the known sorting machine there is no possibility of sorting the fish in sharply distinguished sections (sizes) and the fish will have a tendency to get squeezed in the slit because of the varying distance. Furthermore, all rods are lying in one and the same plane and the fish therefore have no possibility to penetrate downward between tubes during their further movement forwardly over the sorting grille. The sorting capacity is therefore rather small in the known apparatus.

### DISCLOSURE OF THE INVENTION

It is the object of the present invention to provide an apparatus of the kind referred to above, with which it is possible to achieve grading of fish according to size considerably faster than what is possible with the apparatus referred to above, and this object is achieved by, according to the invention, as set forth in the characterizing clause of claim 1.

The fish will be graded according to principles not differing greatly from those applying to the grading of e.g. potatoes, but in addition to this, it appears that the fish have a natural tendency to try to "hide" between the parallel rods or tubes, so that they are motivated both by gravity and by natural instinct to try to pass through the grille. As is well-known, many species of fish can survive being out of water for a short period, and for a somewhat longer period if sprayed with water. This fact is exploited, as the time taken for fish to pass through the requisite grading apparatus can be made to be considerably shorter than the survival period.

Advantageous embodiments of the apparatus, the effects of which - beyond what is obvious - are explained in the following detailed part of the present description, are set forth in claims 2-6.

### BRIEF DESCRIPTION OF THE DRAWINGS

In the following detailed part of the present description, the invention will be explained in more detail with reference to the exemplary embodiment of an apparatus for grading fish according to size according to the invention shown highly simplified and diagrammatically in the drawings, in which
Figure 1 shows the apparatus in vertical section through a plane parallel to the rods or tubes used in the grilles,
Figure 2 is a perspective view of one of the grilles of the apparatus of Figure 1, and
Figures 3a-3c are cross-sectional views showing a grille of the kind shown in Figure 2 in three different adjustments.

### DESCRIPTION OF THE PREFERRED EMBODIMENT

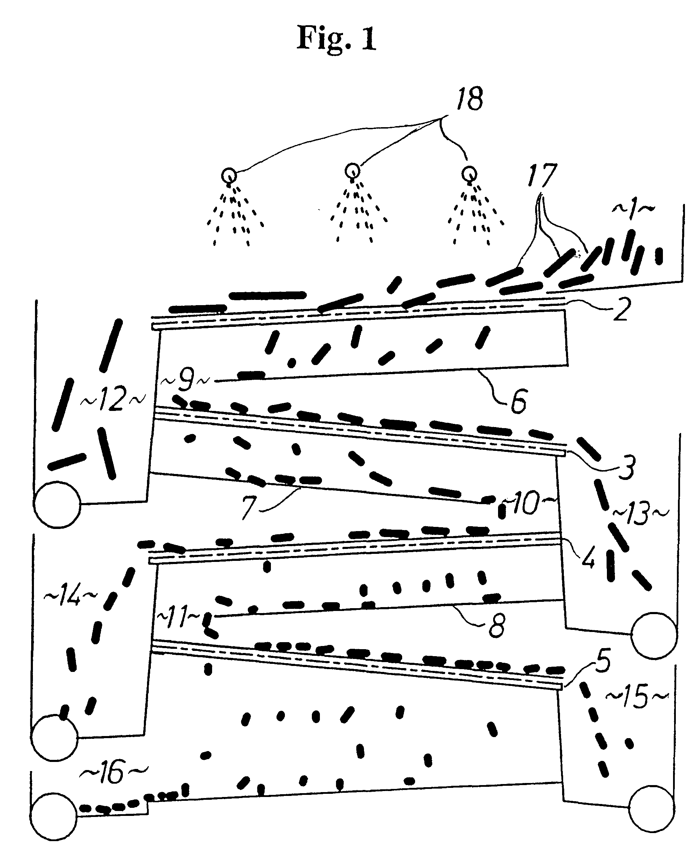

The fish-grading apparatus shown in Figure 1 comprises four grilles 2, 3, 4 and 5 placed one below the other and sloping gently in alternate directions as shown. In a manner to be explained below, each grille 2-4 consists of a number of parallel rods or tubes extending in directions parallel to the plane of the drawing in Figure 1.

Below each of the first three grilles 2, 3 and 4 there is a guide plate 6, 7 and 8, respectively, each extending parallel to but ending short of the respective grille 2, 3 and 4 so as to leave a passage 9, 10 and 11, respectively.

The upper side of each of the grilles 2, 3, 4 and 5 communicates directly with an associated chute 12, 13, 14, 15, respectively, whereas the lower side of the lowermost grille 5 communicates with a final chute 16. All the chutes 12-16 extend transversely to the plane of the drawing in Figure 1 and independently of one another, such as by communicating with individual post-grading bins (not shown).

In operation, fish 17 of different size are introduced at an entry region 1, from which they slide, preferably "lubricated" by fresh water or sea water issuing from a number of spray nozzles 18, along the top of the first grille 2. Here, let it be assumed that the fish can be classified in five different size classes: "very large", "large", "medium", "small", and "very small".

In the preferred embodiment, the first grille 2 is adapted to allow fish in the four smallest categories, i.e. "large" and smaller, to pass through to the guide plate 6, only the fish of the "very large" category landing in the chute 12.

All the remaining fish, i.e. those in the categories "large" and smaller, will slide along the guide plate 6 and fall through the passage 9 onto the second grille 3. The spacing in this grille 3 is adjusted to allow fish of the category "medium" and smaller to pass through the grille so that only the fish of the category "large" will land in the second chute 13, whereas fish of the category "medium" and smaller will slide along the guide plate 7 and fall through the passage 9 onto the third gille 4.

The grading continues in the third and fourth grilles 4 and 5, respectively, so that finally, fish of the categories "medium", "small" and "very small" will land in the chutes 14, 15 and 16, respectively.

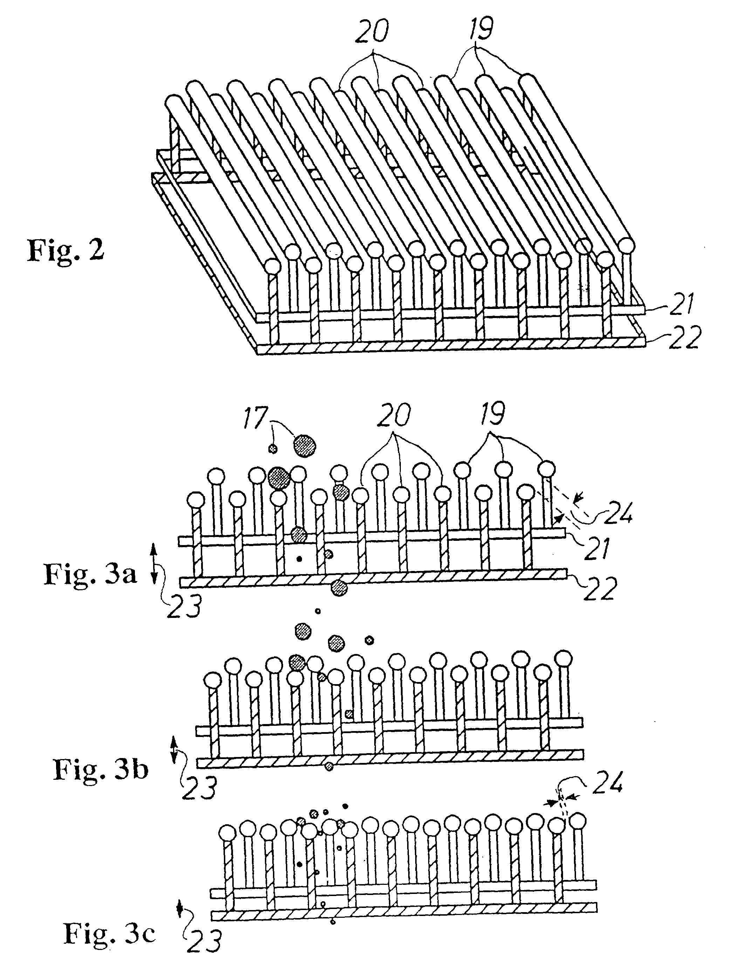

The grille shown diagrammatically in Figure 2 may be any one of the grilles 2-5 shown in Figure 1. The grille shown in Figure 2 consists of two sets of rods 19 and 20, of which the upper set 19 is secured to a first common frame 21, while the second set 20 is secured to a second common frame 22.

As shown in Figures 3a, 3b and 3c, the distance 23 between the first common frame 21 and the second common frame 22 can be adjusted, i.e. by moving one set of rods relative to the other set along a direction at right angles to the main plane of the grille concerned.

With the adjustment shown in Figure 3a, the width 24 of the openings between the rods in the sets 19 and 20 is at a maximum, whereas with the adjustment shown in Figure 3c, this width 24 is at a minimum.

As diagrammatically indicated in Figures 3a-3c, only fish 17 smaller than those of the category "very large" will pass through the grille shown in Figure 3a, whereas in the grille shown in Figure 3c, only fish of the category "very small" will pass.

As can be seen from Figures 3a-3c, it is possible for all the grilles 2-5 in the apparatus shown in Figure 1 to be of identical construction, the only difference being that they are individually adjusted so as to have a width 24 varying from a large value in the uppermost grille 2 to a small value in the lowermost grille 5.

In order to influence the speed, at which the fish slide down along the various grilles, their inclination may be adjusted by suitable means (not shown), preferably of a kind permitting adjustment during operation.

In a further embodiment (not shown), the inclination of the two sets of rods 19 and 20 relative to each other may also be varied, so that the width 24 will increase or decrease along the length of the grille concerned. Like the means mentioned above for adjusting the inclination of the grilles, the means for adjusting the relative inclination of the two sets of rods 19 and 20 are also not shown, but a person skilled in the art of mechanics will be capable of devising and constructing the requisite means for these purposes. The same applies, of course, to the means used for adjusting the two frames 21 and 22 relative to each other.

### LIST OF PARTS

- 1: Entry region
- 2: Grille
- 3: Grille
- 4: Grille
- 5: Grille
- 6: Guide plate
- 7: Guide plate
- 8: Guide plate
- 9: Passage
- 10: Passage
- 11: Passage
- 12: Chute
- 13: Chute
- 14: Chute
- 15: Chute
- 16: Chute
- 17: Fish
- 18: Spraying nozzle
- 19: Set of rods (upper)
- 20: Set of rods (lower)
- 21: First common frame
- 22: Second common frame
- 23: Distance
- 24: Width

## Claims

1. Apparatus for grading fish according to size, said apparatus being of a type in which the fish to be graded or sorted is placed on or may be placed on at least one grille having openings allowing fish up to a certain size to pass through the grille and in which the grille (2, 3, 4, 5) consists of parallel rods or tubes (19, 20) which slope gently in their longitudinal direction, **characterized by** a number of grilles (2, 3, 4, 5) positioned one below the other and sloping in various directions, that the width (24) of the openings decreases from the uppermost grille (2) to the lowermost grille (5), that the parallel rods or tubes (19, 20) are non-rotatably mounted, and that at least one of the grilles (2, 3, 4, 5) consists of at least two sets of parallel rods or tubes (19, 20), of which sets at least one is movable relative to the other(s) in a direction at right angles to the main plane of the grille so as to vary the width (24) of the openings between said rods or tubes (19, 20).

2. Apparatus according to claim 1, **characterized in that** guide plates (6, 7, 8) have been provided in the spaces between said grilles (2, 3, 4, 5): said guide plates (6, 7, 8) extending substantially parallel to and ending short of the grille (2, 3, 4) immediately above it so as to leave a passage (9, 10, 11) for fish to pass to the next grille (3, 4, 5) below it.

3. Apparatus according to claim 1, **characterized in that** the surfaces of said rods or tubes (19, 20) expected to be encountered by the fish (17) are smooth and rounded without sharp edges or points.

4. Apparatus according to any one or any of claims 1-3, **characterized in that** it procures spraying means (18) arranged and adapted to spray a liquid onto the fish being graded or sorted by said grille or grilles (2, 3, 4, 5).

5. Apparatus according to any one or any of the claims 1-4, **characterized in that** the inclination of each grille (2, 3, 4, 5) can be adjusted individually during operation.

6. Apparatus according to any one or any of the claims 1-5, **characterized in that** each end of said at least one set of rods or tubes (19, 20) is movable independently of the other so as to produce openings having a width (24) gradually increasing or decreasing from one end to the other.

## Patentansprüche

1. Vorrichtung zum Sortieren von Fisch der Größe nach, wobei die Vorrichtung von einer Art ist, bei der der zu klassifizierende oder zu sortierende Fisch auf mindestens einem Gitter platziert wird oder platziert werden kann, das Öffnungen aufweist, die Fisch bis zu einer bestimmten Größe ermöglichen, durch das Gitter zu gelangen, und wobei das Gitter (2, 3, 4, 5) aus parallelen Stäben oder Röhren (19, 20) besteht, die sich sanft in ihrer Längsrichtung neigen, **gekennzeichnet durch** mehrere Gitter (2, 3, 4, 5), die jeweils eines unter dem anderen positioniert sind und in verschiedene Richtungen geneigt sind; **dadurch**, dass die Breite (24) der Öffnungen von dem obersten Gitter (2) zum untersten Gitter (5) abnimmt; dass die parallelen Stäbe oder Rohre (19, 20) nicht drehbar montiert sind; und dass mindestens eines der Gitter (2, 3, 4, 5) aus mindestens zwei Stäben von parallelen Stäben oder Röhren (19, 20) besteht, von denen mindestens ein Satz bewegbar relativ zu dem anderen (den anderen) in einer Richtung unter rechten Winkeln zur Hauptebene des Gitters ist, so dass die Breite (24) der Öffnungen zwischen den Stäben oder Röhren (19, 20) variiert wird.

2. Vorrichtung nach Anspruch 1, **dadurch gekennzeichnet, dass** die Führungsplatten (6, 7, 8) in den Räumen zwischen den Gittern (2, 3, 4, 5) vorgesehen werden, wobei sich die Führungsplatten (6, 7, 8) im wesentlichen parallel zu dem Gitter (2, 3, 4) erstrecken und kurz über ihm enden, so dass ein Durchlass (9, 10, 11) verbleibt, durch den Fisch zum nächsten Gitter (3, 4, 5) darunter gelangen kann.

3. Vorrichtung nach Anspruch 1, **dadurch gekennzeichnet, dass** die Oberflächen der Stäbe oder Rohre (19, 20), die durch den Fisch berührt werden, glatt und abgerundet ohne scharfe Ränder oder Spitzen sind.

4. Vorrichtung nach einem der Ansprüche 1 bis 3, **dadurch gekennzeichnet, dass** sie Sprüheinrichtungen (18) umfasst, die angeordnet und geeignet sind, eine Flüssigkeit auf den Fisch zu sprühen, der durch das Gitter oder die Gitter (2, 3, 4, 5) klassifiziert oder sortiert wird.

5. Vorrichtung nach einem der Ansprüche 1-4, **dadurch gekennzeichnet, dass** die Neigung jedes Gitters (2, 3, 4, 5) individuell während des Betriebs justiert werden kann.

6. Vorrichtung nach einem der Ansprüche 1-5, **dadurch gekennzeichnet, dass** jedes Ende des mindestens eines jeden Satzes von Stäben oder Röhren (19, 20) unabhängig von dem anderen bewegbar ist, so dass Öffnungen erzeugt werden, die eine Breite (24) haben, die graduell von einem Ende zum anderen zunimmt oder abnimmt.

## Revendications

1. Appareil de classement de poissons selon la taille, ledit appareil étant d'un type dans lequel le poisson qui doit être classé ou trié est ou peut être placé sur au moins une grille ayant des ouvertures permettant au poisson jusqu'à une certaine taille de passer à travers la grille et dans lequel la grille (2, 3, 4, 5) consiste en tiges ou tubes parallèles (19, 20) qui sont légèrement en pente dans leur direction longitudinale, **caractérisé en ce qu'**il comporte un certain nombre de grilles (2, 3, 4, 5) positionnées l'une en dessous de l'autre et qui sont en pente dans diverses directions, **en ce que** la largeur (24) des ouvertures décroît de la grille supérieure (2) à la grille inférieure (5), **en ce que** les tiges ou tubes parallèles (19, 20) sont montés sans pouvoir tourner et **en ce qu'**au moins l'une des grilles (2, 3, 4, 5) consiste en au moins deux jeux de tiges ou tubes parallèles (19, 20), dont un au moins peut se déplacer par rapport à l'autre ou aux autres dans une direction à angles droits avec le plan principal de la grille de manière à faire varier la largeur (24) des ouvertures entre lesdites tiges ou lesdits tubes (19, 20).

2. Appareil selon la revendication 1, **caractérisé en ce que** des plaques de guidage (6, 7, 8) ont été disposées dans les espaces compris entre lesdites grilles (2, 3, 4, 5); lesdites plaques de guidage (6, 7, 8) s'étendant sensiblement parallèlement à la grille (2, 3, 4) et se terminant à peu de distance de celle-ci, immédiatement au-dessus de celle-ci, de manière à laisser un passage (9, 10, 11) pour que le poisson puisse passer à la grille suivante (3, 4, 5) en dessous de celui-ci.

3. Appareil selon la revendication 1, **caractérisé en ce que** les surfaces desdites tiges ou tubes (19, 20) que le poisson (17) est censé rencontrer sont lisses et arrondies sans bords ni pointes coupants.

4. Appareil selon l'une quelconque des revendications 1 à 3, **caractérisé en ce qu'**il met en oeuvre un moyen de pulvérisation (18) aménagé et adapté pour vaporiser un liquide sur le poisson qui est classé ou trié par ladite grille ou lesdites grilles (2, 3, 4, 5).

5. Appareil selon l'une quelconque des revendications 1 à 4, **caractérisé en ce que** l'inclinaison de chaque grille (2, 3, 4, 5) peut être ajustée individuellement en service.

6. Appareil selon l'une quelconque des revendications 1 à 5, **caractérisé en ce que** chaque extrémité dudit au moins un jeu de tiges ou tubes (19, 20) peut être déplacée indépendamment de l'autre de manière à produire des ouvertures ayant une largeur (24) augmentant ou décroissant graduellement d'une extrémité à l'autre.
